# EUROPEAN PATENT APPLICATION

(11) **EP 3 695 943 A1**
(43) Date of publication of application: **19.08.2020**
(21) Application number: 20156892.0
(22) Date of filing: 12.02.2020
(51) Int. Cl.: B28B 1/24, B29C 45/00, B29C 45/17

(54) **INJECTION MOLDING APPARATUS AND INJECTION MOLDING METHOD FOR CERAMIC POWDER**

(30) Priority: 15.02.2019 TW 108105183
(71) Applicant: Chung Yuan Christian University, Chung Li City 32023 (TW)
(72) Inventor: CHEN, Shia-Chung, 32023 Taoyuan City (TW); LEE, Kuan-Hua, 32023 Taoyuan City (TW); CHANG, Che-Wei, 32023 Taoyuan City (TW)
(74) Representative: Ter Meer Steinmeister & Partner

(57) **Abstract**

An injection molding apparatus including a mold, an injection device and a gas supply device is provided. The injection device is adapted to inject a ceramic powder material into the mold. The gas supply device is adapted to provide a gas into the mold to form a cavity in the ceramic powder material by the gas. In addition, an injection molding method is also provided.

## Description

### BACKGROUND

### Field of the Invention

The invention relates to a molding apparatus and a molding method and more particularly, to an injection molding apparatus and an injection molding method.

### Description of Related Art

Ceramic powder injection molding is one of the important processes of ceramic products. This process has advantages of high dimensional complexity and rapid process. However, a ceramic powder material costs relatively high and has a relatively complex processing process. In addition, the ceramic powder itself does not have fluidity, and it is necessary to add other additives to increase the fluidity of the ceramic powder material, which also results in the increase of the material cost. Therefore, how to reduce the material cost and enhance production efficiency is a great challenge for people skilled in the art.

### SUMMARY

The invention provides an injection molding apparatus and an injection molding method capable of reducing a usage amount of the entire material, so as to reduce material cost and enhance production efficiency.

An injection molding apparatus of the invention includes a mold, an injection device and a gas supply device. The injection device is adapted to inject a ceramic powder material into the mold. The gas supply device is adapted to provide a gas into the mold to form a cavity in the ceramic powder material by the gas.

In an embodiment of the invention, the mold has a gas injection channel. The gas injection channel communicates the inside of the mold with the outside of the mold. The gas supply device is adapted to provide the gas into the mold through the gas injection channel.

In an embodiment of the invention, the injection device and the gas injection channel are located at a same side of the mold.

In an embodiment of the invention, the injection molding apparatus further includes a pressure sensing component disposed in the gas injection channel.

An injection molding method of the invention includes: injecting a ceramic powder material into a mold by an injection device; and providing a gas into the mold by a gas supply device to form a cavity in the ceramic powder material by the gas.

In an embodiment of the invention, in the injection molding method, after the ceramic powder material is injected into the mold, the gas is provided into the mold.

In an embodiment of the invention, in the injection molding method, before the gas is provided into the mold, the ceramic powder material is not fully filled in the mold. The ceramic powder material is pushed toward an inner wall surface of the mold by the gas.

In an embodiment of the invention, in the injection molding method, before the gas is provided into the mold, the ceramic powder material is fully filled in the mold. The ceramic powder material is compressed toward the inner wall surface of the mold by the gas.

Based on the above, the invention can achieve forming a cavity in the ceramic powder material by the gas, thereby reducing a usage amount of the entire material to reduce material cost. In addition, after the usage amount of the entire material is reduced, a cooling time and a processing time can be reduced in a subsequent process, thereby enhancing production efficiency.

In order to make the aforementioned and other features and advantages of the invention more comprehensible, several embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram illustrating an injection molding apparatus according to an embodiment of the invention.
FIG. 2 is a flowchart illustrating an injection molding method according to an embodiment of the invention.
FIG. 3 is a schematic diagram illustrating the injection molding apparatus before the gas is provided into the mold according to an embodiment of the invention.
FIG. 4 is a schematic diagram illustrating the injection molding apparatus before the gas is provided into the mold according to another embodiment of the invention.

### DESCRIPTION OF EMBODIMENTS

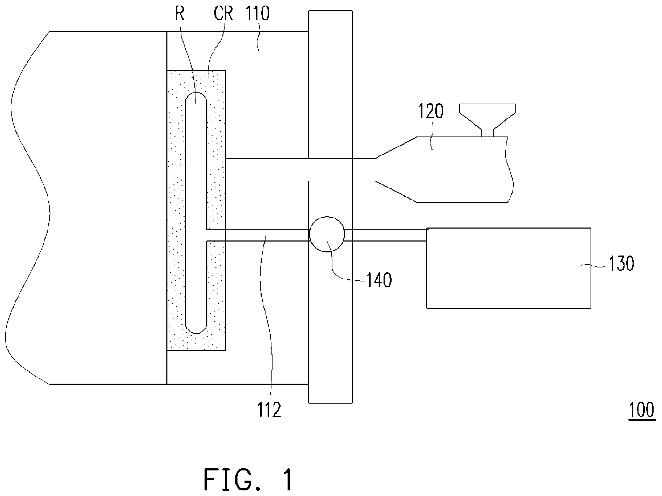

FIG. 1 is a schematic diagram illustrating an injection molding apparatus according to an embodiment of the invention. Referring to FIG. 1, an injection molding apparatus 100 of the present embodiment includes a mold 110, an injection device 120 and a gas supply device 130. The injection device 120 is adapted to inject a ceramic powder material CR into the mold 110. It should be noted that the ceramic powder material CR of the present embodiment is not limited to single ceramic powder particles, but refers to that the entire ceramic powder material CR is composed of a plurality of ceramic powder particles, and the type of the ceramic powder material CR is not particularly limited in the invention. The ceramic powder material CR, as long as being capable of being injected into the mold 110, pertains to the scope sought for protection by the invention. The gas supply device 130 is adapted to provide a gas into the mold 110 to form a cavity R in the ceramic powder material CR by the gas. Specifically, the ceramic powder material CR may surround the cavity R to form a hollow structure inside the mold 110. The gas may be an inert gas or a nitrogen gas.

Thus, in the present embodiment, a usage amount of the entire material can be reduced by forming the cavity in the ceramic powder material CR by the gas, so as to reduce material cost. In addition, after the usage amount of the entire material is reduced, a cooling time and a processing time can be reduced in a subsequent process, thereby enhancing production efficiency.

In the present embodiment, the mold 110 may have a gas injection channel 112. The gas injection channel 112 communicates the inside of the mold 110 with the outside of the mold 110. The gas supply device 130 is adapted to provide the gas into the mold 110 through the gas injection channel 112.

It should be noted that the invention does not limit the position where the gas injection channel 112 communicates with the mold 110, as long as the gas injection channel 112 can communicate the inside of the mold 110 and outside of the mold 110, it belongs to the scope of the invention. For example, in this embodiment, the gas supply device 130 may be an inlet connecting the mold 110 to communicate the inside of the mold 110 and the outside of the mold 110. In another embodiment not shown, the gas supply device 130 may be an outlet connecting the mold 110 to communicate the inside of the mold 110 and the outside of the mold 110. In yet another embodiment not shown, the gas supply device 130 may be an inlet and an outlet at the same time connecting the mold 110 to communicate the inside of the mold 110 and the outside of the mold 110.

The injection device 120 and the gas injection channel 112 may be located at a same side of the mold 110, and thus, a position at which the gas is injected into the mold 110 may be adjacent to a position at which the injection device 120 injects the ceramic powder material CR into the mold 110, such that the cavity R may be ensured to be formed in the ceramic powder material CR when the gas is injected into the mold 110. However, the invention is not limited to this. In another embodiment not shown, the injection device 120 and the gas injection channel 112 may be located on different sides of the mold 110.

In addition, a pressure sensing component 140 may be further included in the present embodiment. The pressure sensing component 140 is disposed in the gas injection channel 112. Thus, the pressure sensing component 140 may be employed to sense a pressure of the gas when being injected into the mold 110, so as to control an injection pressure when the gas supply device 130 injects the gas into the mold 110.

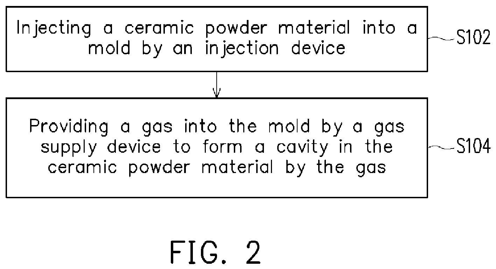

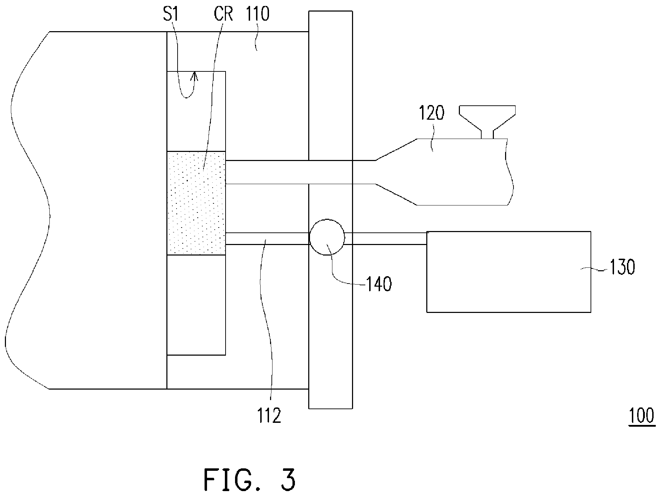

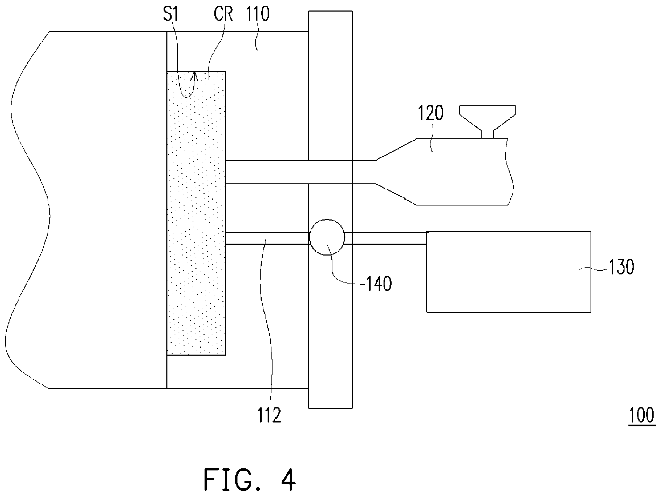

A main flow of an injection molding method of an embodiment of the invention is described with reference to the drawings below. FIG. 2 is a flowchart illustrating an injection molding method according to an embodiment of the invention. FIG. 3 is a schematic diagram illustrating the injection molding apparatus before the gas is provided into the mold according to an embodiment of the invention. FIG. 4 is a schematic diagram illustrating the injection molding apparatus before the gas is provided into the mold according to another embodiment of the invention. Referring to both FIG. 2 and FIG. 3 first, the ceramic powder material CR is injected into the mold 110 by the injection device 120 (step S102). To be detailed, the ceramic powder material CR is, for example, heated and melted and then injected into the mold 110 by the injection device 120. Then, referring to both FIG. 1 and FIG. 2, while the ceramic powder material CR injected into the mold 110, the gas is provided into the mold 110 by the gas supply device 130 to form the cavity R in the ceramic powder material CR by the gas (step S104).

Specifically, in the present embodiment, as illustrated in FIG. 3, before the gas is provided into the mold 110, the ceramic powder material CR may not be fully filled in the mold 110, namely, the ceramic powder material CR is filled in only a part of the mold 110. Then, the ceramic powder material CR is further pushed toward an inner wall surface S1 of the mold 110 by the gas to form the cavity R in the ceramic powder material CR, as illustrated in FIG. 1. Thus, in the present embodiment, the usage amount of the ceramic powder material CR may be reduced in the beginning, so as to reduce the material cost and enhance the production efficiency. However, the invention is not limited thereto. In another embodiment, as illustrated in FIG. 4, before the ceramic powder material CR is provided into the mold 110, the gas can be supplied to the mold 110 to provide pressure, and then the ceramic powder material CR fully fills in the mold 110 to further compress the ceramic powder material CR toward the inner wall surface S1 of the mold 110 by the gas, so as to form the cavity R in the ceramic powder material CR as illustrated in FIG. 1. Since the gas pressure can improve the melted front of the ceramic powder material CR during filling, the ceramic powder material CR can be pushed toward the inner wall surface S1 of the mold 110 by the gas or the ceramic powder material CR can be compressed toward the inner wall surface S1 of the mold 110 by the gas to solve the problem of high shear caused by the traditional fountain flow.

In light of the foregoing, the invention can achieve forming a cavity in the ceramic powder material by the gas, so as to reduce the usage amount of the entire material to reduce the material cost. In addition, after the usage amount of the entire material is reduced, the cooling time and the processing time can be reduced in a subsequent process, thereby enhancing the production efficiency.

## Claims

1. An injection molding apparatus (100), comprising:
a mold (110);
an injection device (120), adapted to inject a ceramic powder material into the mold (110); and
a gas supply device (130), adapted to provide a gas into the mold (110) to form a cavity in the ceramic powder material by the gas.

2. The injection molding apparatus (100) according to claim 1, wherein the mold (110) has a gas injection channel (112) communicating the inside of the mold (110) and the outside of the mold (110), and the gas supply device (130) is adapted to provide the gas into the mold (110) through the gas injection channel (112).

3. The injection molding apparatus (100) according to claim 2, wherein the injection device (120) and the gas injection channel (112) are located at a same side or different sides of the mold (110).

4. The injection molding apparatus (100) according to claim 2, further comprising a pressure sensing component (140) disposed in the gas injection channel (112).

5. An injection molding method, comprising:
injecting a ceramic powder material into a mold (110) by an injection device (120); and
providing a gas into the mold (110) by a gas supply device (130) to form a cavity in the ceramic powder material by the gas.

6. The injection molding method according to claim 5, wherein while the ceramic powder material is injected into the mold (110), the gas is provided into the mold (110).

7. The injection molding method according to claim 5, wherein before the gas is provided into the mold (110), the ceramic powder material is not fully filled in the mold (110).

8. The injection molding method according to claim 7, wherein the ceramic powder material is pushed toward an inner wall surface of the mold (110) by the gas.

9. The injection molding method according to claim 5, wherein before the ceramic powder material is provided into the mold (110), the gas is provided into the mold (110).

10. The injection molding method according to claim 9, wherein the ceramic powder material is compressed toward an inner wall surface of the mold (110) by the gas.
